# NOUVEAU FASCICULE DE BREVET EUROPEEN

(11) **EP 2 791 536 B2**
(45) Date de publication et mention de la décision concernant l'opposition: **26.06.2019**
(45) Mention de la délivrance du brevet: 16.03.2016
(21) Numéro de dépôt: 12797908.6
(22) Date de dépôt: 06.12.2012
(51) Int. Cl.: F16D 65/092, F16D 65/097

(54) **PATIN DE FREIN A DISQUE.**
SCHEIBENBREMSBELAG
DISC BRAKE PAD

(30) Priorité: 15.12.2011 FR 1103910
(43) Date de publication de la demande: 22.10.2014
(73) Titulaire: Robert Bosch GmbH, 70442 Stuttgart (DE)
(72) Inventeur: BERNARD, Simon, F-94170 Le Perreux s/Marne (FR); MERRIEN, Sandra, F-94120 Fontenay Sous Bois (FR); MAHOUDEAUX, Roger, F-93150 Le Blanc Mesnil (FR)
(86) Numéro de dépôt international: PCT/EP2012/074599
(87) Numéro de publication internationale: WO 2013/087493

(56) Documents cités:
- EP-A2- 1 447 585
- DE-A1- 19 650 592
- DE-A1-102009 006 285
- US-A1- 2007 119 665

## Description

### Domaine de l'invention

La présente invention se rapporte à un patin de frein à disque comportant des oreilles munies chacune d'une rainure recevant la languette d'un ressort enroulé, venant dans un logement dans la chape de frein.

A cet effet, l'invention a pour objet un patin de frein à disque comportant des oreilles munies chacune d'une rainure recevant une languette d'un ressort enroulé ou ressort en colimaçon pour venir dans un logement de la chape du frein à disque, ce patin de frein étant caractérisé en ce que la rainure a une section globalement rectangulaire mixtiligne dont le fond est composé en section transversale d'une partie centrale bombée formant un appui se poursuivant de chaque côté par un congé en retrait du plan d'appui, le congé rejoignant le côté respectif de la rainure derrière le plan d'appui.

Grâce à la position en retrait des congés qui forment la jonction entre le fond de la rainure et ses côtés, la dimension de la rainure en section pourra être adaptée étroitement à la section de la languette de façon à bloquer celle-ci pour éviter qu'elle ne bascule sous l'effet des mouvements appliqués à la plaquette de frein (dans le sens du freinage ou celui du dégagement) positionnant le ressort colimaçon en travers et augmentant les efforts de translation de la plaquette de frein par rapport à la chape.

La qualité du mouvement ainsi autorisé pour la plaquette de frein est un élément déterminant dans le bon fonctionnement du frein et dans la réduction de l'usure de la plaquette de frein et de la consommation.

Selon l'invention, une extrémité de la rainure dans le sens longitudinal de la rainure est débouchante et l'autre extrémité est fermée. Cela permet d'éviter toute erreur de montage des ressorts colimaçon sur les oreilles de la plaquette puisque la rainure de chaque oreille est ainsi orientée du fait qu'elle n'est pas débouchante.

La rainure permet de recevoir en la tenant, la languette du ressort colimaçon assurant le guidage de chaque oreille dans le logement de la chape de frein sans risque de basculement de la languette et par suite du ressort.

### Etat de la technique

On connaît déjà un patin de frein à disque du type défini ci-dessus, représenté à la figure 1 et décrit par exemple dans DE-A-10 2009 006 285, montrant de manière générale un disque de frein 1 chevauché par une chape 2 composée de deux bras 20 reliés par deux pontets 21. Ces deux bras 20 en U viennent de part et d'autre du disque 1 et portent chacun un patin de frein. Les patins de frein 3 sont munis à leurs extrémités d'oreilles 31 pour leur montage dans les logements 22 de chaque bras, par l'intermédiaire d'un ressort de guidage 4 équipant chaque logement 22 et coopérant avec l'oreille 31 du patin, elle-même munie d'un ressort auxiliaire 5 selon l'état de la technique.

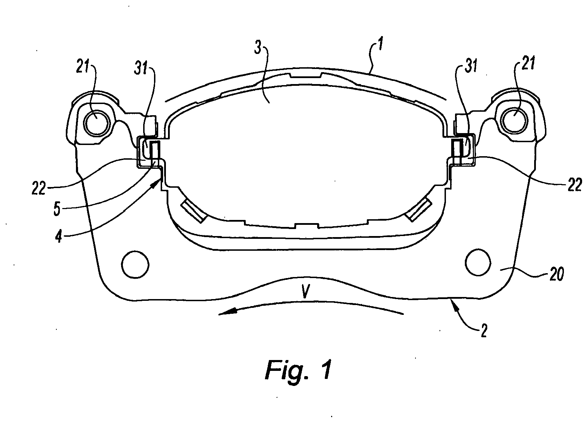

Les oreilles 31 aux deux extrémités du patin 3 coulissent axialement dans les organes de guidage 4 en étant tenu par le ressort 5, c'est-à-dire perpendiculairement au plan de la figure 1.

Le rôle des organes de guidage 4 est de guider le patin pour le freinage et son retour en position hors contact du disque de frein 1 et d'amortir le choc des oreilles 31 contre le fond de chaque logement 22 lorsque les patins 3 sont entraînés par le disque 1 pendant une phase de freinage.

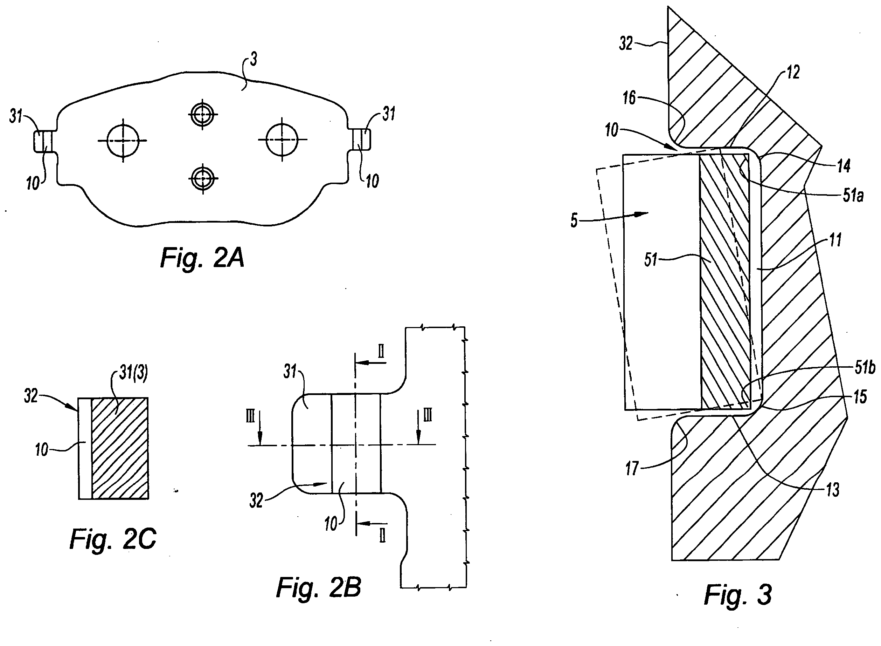

Selon les figures 2A, 2B, 2C, le patin de frein 3 connu comporte dans ses oreilles 31 deux rainures 10, pour recevoir chacune un ressort 5 dit « ressort colimaçon » à cause de sa forme enroulée en spirale terminée par une languette de fixation 51. Ce ressort 5 est engagé avec sa languette 51 dans la rainure 10 et le patin 3 ainsi équipé est ensuite glissé dans les logements 22 (figure 1).

La figure 2B est une vue agrandie d'une oreille 31 montrant la rainure 10. La figure 2C est une vue en coupe selon II-II de la figure 2B montrant la section de la rainure 10. La figure 3 est une vue en coupe agrandie selon III-III de la figure 2 montrant plus particulièrement la forme de la rainure 10 de section globalement rectangulaire avec un fond 11 et deux côtés 12, 13 reliés au fond par des congés 14, 15. L'entrée de la rainure 10 dans la face 32 de l'oreille est également bordée par des congés 16, 17.

La languette 51 du ressort colimaçon 5 est représentée en vue en coupe installée dans la rainure 10. Cette languette 51 s'appuie par ses coins 51a, 51b contre les congés 14, 15 de la rainure de sorte que le positionnement de cette languette 51 et par suite celle du ressort 5 et du patin 3 ne sont pas stables. La languette 51 peut basculer et se mettre dans la position représentée en traits interrompus.

La languette 51 ne peut s'appuyer contre le fond 11 de la rainure 10 que si sa largeur est suffisamment réduite pour que ses coins 51a, 51b n'arrivent pas jusqu'aux congés 14 et/ou 15. Mais dans ce cas, la languette 51 flotte dans la rainure 10 et peut glisser transversalement et risque néanmoins venir en appui par un coin 51a ou 51b contre le congé 14, 15 ou contre le côté 12, 13 de la rainure.

Globalement, la tenue du ressort 5 sur l'oreille 31 n'est pas stable et crée un flottement de la tenue du patin de frein 3 dans les logements 22 (figure 1).

### But de l'invention

La présente invention a pour but de développer une plaquette de frein à disque permettant de réduire la rotation du ressort radial après montage de la rainure et d'éviter une erreur de montage d'un ressort radial inadapté.

### Exposé et avantages de l'invention

A cet effet, la présente invention a pour objet un patin de frein caractérisé en ce qu'une extrémité de la rainure dans le sens longitudinal est débouchante et l'autre extrémité est fermée.

### Dessins

La présente invention sera décrite ci-après à l'aide d'un exemple de réalisation d'une plaquette de frein à disque selon l'invention représentée dans les dessins annexés dans lesquels :
- la figure 1 est une vue de côté d'une chape de frein à disque équipée de deux organes de guidage et d'un patin de frein selon l'état de la technique,
- la figure 2A est une vue en plan d'un patin de frein connu,
- la figure 2B est une vue de détail à échelle agrandie d'une oreille du patin de frein de la figure 2A,
- la figure 2C est une vue en coupe selon II-II de la figure 2B,
- la figure 3 est une section à échelle très agrandie de l'oreille 31 du patin de la figure 2B selon la ligne de coupe III-III,
- la figure 4A est une vue en plan d'un patin de frein selon l'invention,
- la figure 4B est une vue à échelle agrandie d'une oreille du patin de frein de la figure 4A,
- la figure 4C est une vue en coupe selon IV-IV de l'oreille de patin de la figure 4B,
- la figure 5 est une section selon V-V de la figure 4B à échelle très agrandie,
- la figure 6A est une vue en coupe à échelle très agrandie correspondant à la figure 4C montrant le positionnement de la languette du ressort dans la rainure du patin de frein selon l'invention,
- la figure 6B est une vue en coupe analogue à celle de la figure 5 montrant le positionnement de la languette d'un ressort colimaçon dans la rainure du patin de frein selon l'invention.

### Description de modes de réalisation de l'invention

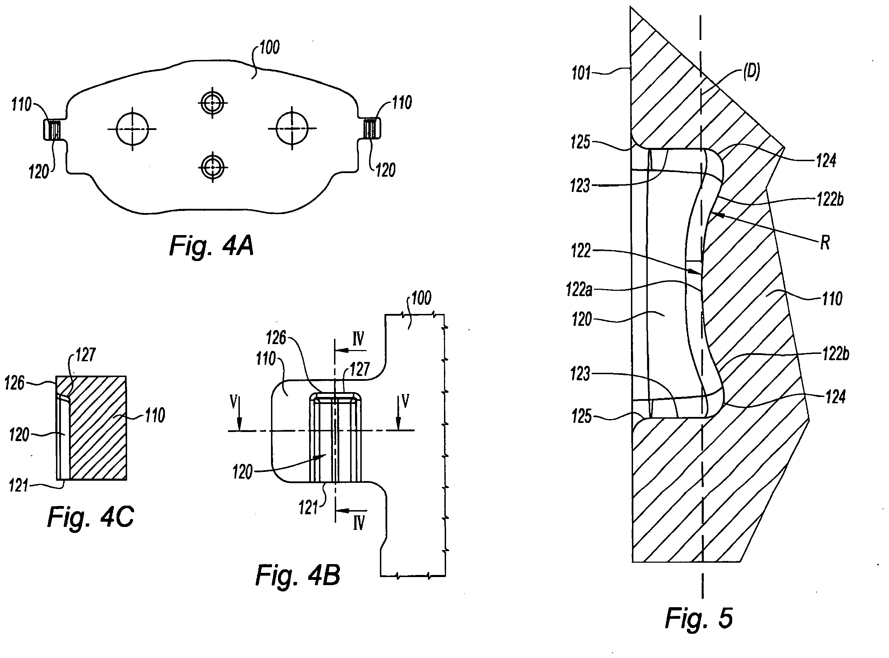

Selon les figure 4A,B,C et 5, l'invention a pour objet un patin de frein 100 dont les oreilles 110 comportent une rainure 120 pour recevoir la languette 51 d'un ressort colimaçon 5 servant à installer le patin de frein 100 dans un logement respectif 122 (figure 1) d'un frein.

Comme le montre la figure 4C et tout particulièrement la vue à échelle très agrandie de la figure 5, la rainure 120, dont l'entrée 121 se situe du côté bas de la plaquette (en prenant l'orientation de la figure 4A), a en section transversale une forme globalement rectangulaire mixtiligne formée d'un fond 122 dont la partie centrale 122a est constituée par un méplat à grand rayon de courbure se poursuivant par une zone en arc de cercle 122b de rayon R de chaque côté pour re-joindre un congé 124 relié à chacun des côtés 123. Les côtés 123 débouchent sur la face extérieure 101 de l'oreille 110 du patin par un congé 125.

La droite (D) figurant un plan d'appui passant par le méplat 122a entre les segments de cercle 122b coupe les parois latérales 123 au-delà des congés 124, c'est-à-dire qu'elle coupe pratiquement le segment droit de chacune des parois 123 au-delà de la courbure des congés 124. La droite (D) représente dans la section, le plan d'appui de la languette 51 contre le fond 122 de la rainure 110. Les parties courbes 122b sont en retrait par rapport à cette droite (D) ou plan d'appui. Il en est de même des congés 124 qui ne rejoignent leur côté respectif 123 pratiquement que derrière la droite (D). Ainsi le contour formé par la droite (D) et les côtés 123 est constitué de segments rectilignes constituant le logement de la languette 51.

Il est à remarquer que les parois 123 peuvent être légèrement ouvertes vers la face 101 du patin.

Les figures 4B, 4C montrent que selon l'orientation de la plaquette de la figure 4A, la rainure 120 ne débouche qu'en partie basse 121 et sa partie haute 126 est fermée en étant bordée de préférence par un congé 127 qui est le prolongement du congé latéral 124, c'est-à-dire toujours en retrait par rapport à la surface géométrique du fond de la rainure schématisé par la droite D à la figure 5.

En résumé, dans la rainure 120 du patin de frein selon l'invention, le fond 122 est bordé sur ses côtés et sur son dessus par un congé 124, globalement en forme de U, en retrait par rapport à la surface du méplat 122a la plus en relief du fond 122 c'est-à-dire la droite (D) ou le plan d'appui.

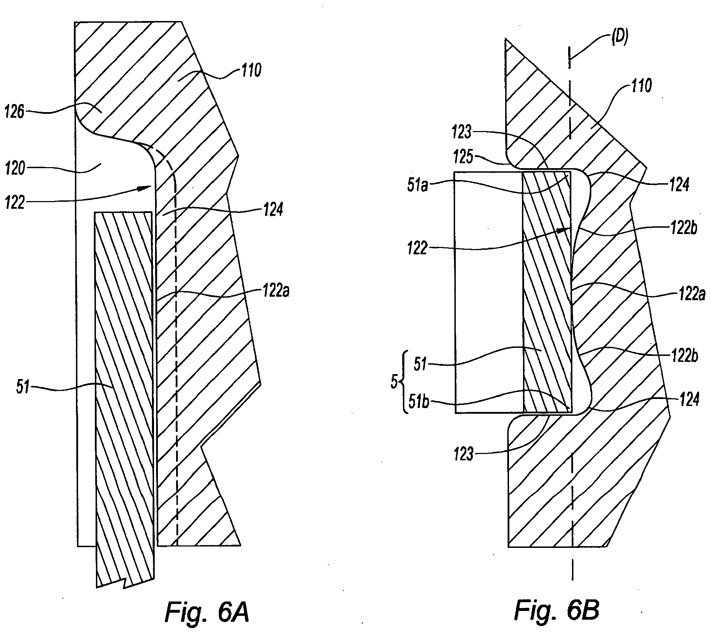

Les figures 6A, 6B montrent schématiquement le positionnement de la languette 51 du ressort 5 engagée dans la rainure 120 de l'oreille 110.

La figure 6A montre que la languette 51 s'appuie contre le méplat 122a ou sommet du fond 122. Le ressort 5 pince l'oreille 31 d'un côté par sa languette 51 et de l'autre par sa boucle en colimaçon, non représentée, en étant positionné par sa languette engagée dans la rainure, l'autre côté de l'oreille 31 étant lisse.

La figure 6B montre comment la languette 51 est soutenue par le méplat 122a du fond 120 ainsi que par les côtés 125 sans risque de basculement. En effet, comme les coins 51a, 51b de la languette 51 ne sont plus en contact avec les congés, ici les congés 124 en retrait par rapport à la surface d'appui de la languette 51 qui correspond en fait à la droite D de la figure 5, on peut soit réduire la largeur de la rainure 120, soit augmenter la largeur de la languette 151 pour réduire au minimum l'espace libre dans le sens transversal entre les côtés de la languette 51 et les parois 123. Cela améliore considérablement la tenue du ressort 5 dans la rainure 120 et ainsi améliore le fonctionnement du frein.

L'invention s'applique au domaine des freins à disque de véhicules automobiles et notamment à la réalisation des patins de frein à disque.

A titre d'exemple, la largeur de la rainure 120 entre les côtés 123 est par exemple de l'ordre de 3,5 mm et la largeur du méplat de l'ordre de 0,5 mm. Le retrait des parties en arc de cercle 122b et des congés 124 par rapport au plan figuré par la droite (D) est de l'ordre de 0,5 mm. L'angle d'ouverture des côtés 123 est au maximum de 6°.

## Revendications

1. Patin de frein à disque comportant des oreilles munies chacune d'une rainure recevant la languette (51) d'un ressort (5) enroulé, venant dans un logement dans la chape de frein,
**caractérisé en ce que**
la rainure (120) a une section globalement rectangulaire mixtiligne dont le fond (122) est composé en section transversale d'une partie centrale (122a) bombée formant un appui se poursuivant de chaque côté par un congé (122b) en retrait du plan d'appui (D) le congé (122b) rejoignant le côté (123) respectif de la rainure derrière le plan d'appui (D),
une extrémité de la rainure (100) dans le sens longitudinal est débouchante (121) et l'autre extrémité (126) est fermée.

## Patentansprüche

1. Scheibenbremsbelag, umfassend Lappen, die jeweils mit einer Nut versehen sind, in der die Zunge (51) einer Schlingfeder (5) aufgenommen ist, die in einer Aufnahme in der Bremsgabel angeordnet ist,
**dadurch gekennzeichnet, dass**
die Nut (120) einen allgemein rechteckigen mixtilinearen Querschnitt hat, deren Boden (122) im Querschnitt aus einem mittleren gewölbten Teil (122a) besteht, der eine Auflage bildet, die an jeder Seite mit einer Auskehlung (122b) weitergeht, die von der Auflageebene (D) zurückgesetzt ist, wobei die Auskehlung (122b) hinter der Auflageebene (D) wieder mit der jeweiligen Seite (123) der Nut zusammentrifft,
wobei ein Ende der Nut (100) in der Längsrichtung offen (121) ist und das andere Ende (126) geschlossen ist.

## Claims

1. Disk brake pad comprising lugs which are each provided with a groove which receives the tongue (51) of a wound spring (5), moving into a housing in the brake cover,
**characterized in that**
the groove (120) has a mixtilinear generally rectangular cross-section whose base (122) is composed in cross-section of a protruding central portion (122a) which forms an abutment which is extended at each side by a fillet (122b) which is recessed from the abutment plane (D), the fillet (122b) joining the respective Side (123) of the groove behind the abutment plane (D),
one end of the groove (100) in the longitudinal direction being an open end (121) and the other end (126) being closed.
